# FASCICULE DE BREVET EUROPEEN

(11) **EP 4 343 282 B1**
(45) Date de publication et mention de la délivrance du brevet: **07.05.2025**
(21) Numéro de dépôt: 23198711.6
(22) Date de dépôt: 21.09.2023
(51) Int. Cl.: G01C 19/5691

(54) **CAPTEUR GYROSCOPIQUE VIBRANT**
VIBRIERENDER KREISELSENSOR
VIBRATING GYROSCOPIC SENSOR

(30) Priorité: 23.09.2022 FR 2209680
(43) Date de publication de la demande: 27.03.2024
(73) Titulaire: Jxsens, 69130 Ecully (FR)
(72) Inventeur: BEITIA, José Louis, 69002 LYON (FR)
(74) Mandataire: Cabinet Didier Martin

(56) Documents cités:
- EP-A1- 2 669 629
- CN-A- 112 629 514
- CN-B- 101 968 359
- FR-A1- 2 864 226
- US-A1- 2007 240 508
- US-B1- 10 422 641

## Description

La présente invention se rapporte au domaine technique général des capteurs de rotation, et plus précisément à celui des capteurs gyroscopiques basés sur les forces de Coriolis pour mesurer des vitesses de rotation et/ou des positions angulaires, tels que les gyromètres ou gyroscopes vibrants à effet Coriolis.

La présente invention concerne plus particulièrement un capteur gyroscopique vibrant comprenant une embase, ainsi qu'un résonateur qui lui-même inclut un pied central par lequel le résonateur est attaché à ladite embase et une paroi latérale qui s'élève à partir dudit pied jusqu'à un bord terminal libre délimitant une ouverture.

Les gyromètres à structure vibrante, destinés à mesurer des vitesses angulaires, sont bien connus. Ces gyromètres vibrants reposent sur l'effet Coriolis, qui conduit un objet vibrant, présentant un mode de résonance d'ordre 2 se déclinant en un mode primaire et un mode secondaire, orthogonaux modalement, à subir une force, lorsqu'il tourne, pour continuer à vibrer dans un seul et même plan dans l'espace des modes défini par les modes primaire et secondaire. L'application d'une force opposée permet de faire tourner le plan de vibration avec l'objet. La vibration est alors immobile par rapport à un repère tournant lié à l'objet. La mesure de cette force permet de déterminer la vitesse angulaire.

En l'absence de l'application d'une force opposée aux forces de Coriolis, la mesure de la position du repère lié à l'objet tournant par rapport à la vibration, qui elle est fixe, donne directement l'information de position angulaire de l'objet. On parle alors de fonctionnement en mode gyroscope, par opposition au précédent mode de fonctionnement, appelé mode gyromètre.

On connaît en particulier des gyromètres à cylindre vibrant qui mettent en œuvre une embase à laquelle est fixé, au moyen d'une tige centrale, un résonateur métallique présentant la forme d'un pot avec une paroi latérale cylindrique et un fond plat pourvu d'un manchon d'accueil de la tige centrale. Des éléments piézoélectriques sont disposés sur et contre ladite paroi latérale cylindrique pour exciter en vibration le résonateur et détecter les vibrations de ce dernier.

Ces gyromètres à cylindre vibrant ont fait l'objet de différentes évolutions au fil des dernières décennies. En particulier, il a été proposé un résonateur en forme de champignon, avec un pied central fixé à l'embase qui supporte un chapeau cylindrique de sommet plat sur lequel sont disposés huit éléments piézoélectriques. Cette conception en forme de champignon visait en particulier à réduire les dimensions et à réduire les coûts de fabrication. Elle induit toutefois, tout comme au demeurant la conception en forme de pot à fond plat précité, la présence de modes parasites structurels qui affectent le bon fonctionnement du système électronique de contrôle du résonateur, en particulier en présence de vibrations externes comme c'est généralement le cas en environnement opérationnel.

Plus précisément, avec les conceptions à cylindre vibrant de l'art antérieur évoquées ci-avant, on constate la survenance de trois modes parasites, savoir un mode tambour pour lequel le fond plat se déforme parallèlement à l'axe principal de symétrie du résonateur, un mode en flexion sur le pied central et un mode rotationnel pour lequel l'ensemble du cylindre s'enroule autour du pied, dont les fréquences sont voisines de celles des modes primaire et secondaire symétriques utilisés pour détecter les rotations angulaires ou les vitesses angulaires. Le rejet de ces modes parasites est l'un des principaux défis techniques à relever en ce qui concerne les gyromètres vibrants à effet Coriolis mettant en œuvre un résonateur cylindrique, en particulier. En effet, les modes parasites empêchent la mise en œuvre d'une électronique de commande à large bande passante (par exemple de plusieurs centaines de Hz à environ 1 kHz), requise par exemple pour des applications de stabilisation haut de gamme, dans la mesure où des singularités apparaissent dans le diagramme de phase de Nyquist conduisant à des boucles de contrôle des modes utiles, primaire et secondaire, instables. De plus, ces modes parasites sont le plus souvent fortement couplés aux vibrations mécaniques externes, y compris aux chocs mécaniques externes. Ainsi, en présence de ces vibrations externes, des signaux puissants sont susceptibles d'être détectés et de perturber, voire saturer, l'électronique de contrôle.

Afin de surmonter ce problème, il a été proposé de recourir à un plus grand nombre d'éléments piézoélectriques, connectés de façon appropriée entre eux au moyen d'un module électronique interne pour obtenir un rejet naturel des signaux générés par les modes parasites du résonateur, après combinaison appropriée des signaux. Toutefois, cette solution n'est pas entièrement satisfaisante, car elle entraîne une complexité et un coût accrus, et n'empêche pas les modes parasites d'exister et d'être stimulés lorsque le résonateur est soumis à des vibrations externes.

Pour résoudre cette problématique d'occurrence de modes parasites, il a été proposée une conception alternative qui repose sur la mise en œuvre d'isolateurs de vibration en élastomère intégrés à l'embase pour isoler mécaniquement le résonateur du système externe. Une telle conception permet de réduire l'amplitude des signaux générés au niveau des éléments piézoélectriques de détection lorsque les modes parasites sont couplés à des vibrations externes. Toutefois, un tel agencement est excessivement coûteux (notamment par rapport à l'utilisation de plots de suspension individuels du commerce) et peut entraîner un mouvement de balancement sur les isolateurs sous l'effet d'accélérations linéaires externes transverses. Cela peut conduire, dans certaines situations, à des erreurs de mesure en sortie du capteur, erreurs aussi appelées « rectification de biais par mouvements coniques ».

Le document US-2007/0240508A1 décrit un capteur de vitesse angulaire qui se présente sous la forme d'un ensemble de coupelle incluant un corps résonant et une tige 110 avec une portion de forme évasée. Le document FR-2864226A1 décrit quant à lui un microgyromètre micro-usiné avec une extrémité d'ancrage solidaire d'un support fixe et au moins une paroi vibrante dont la base constitue l'extrémité d'ancrage, ledit microgyromètre étant dépourvu de pied.

Les objets assignés à l'invention visent par conséquent à remédier aux différents inconvénients exposés dans ce qui précède et à proposer un nouveau capteur gyroscopique vibrant dont la construction, tout en étant extrêmement simple et robuste, permet en particulier de limiter l'influence négative des modes parasites, et en particulier de limiter l'apparition d'un mode parasite « tambour » dans une gamme de fréquences proche de celle des modes primaire et secondaire de vibration utilisée pour la mesure, tout en limitant les erreurs de mesure du capteur.

Un autre objet de l'invention vise à proposer un nouveau capteur gyroscopique vibrant qui, tout en étant extrêmement compact et léger, présente une conception maintenant les fréquences du mode tambour parasite à des valeurs significativement supérieures à celles des fréquences des modes primaire et secondaire, permettant ainsi de distinguer nettement les modes primaire et secondaire du mode tambour parasite et limitant le couplage entre les modes primaire et secondaire et le mode tambour parasite.

Un autre objet de l'invention vise à proposer un nouveau capteur gyroscopique vibrant facile et rapide à fabriquer industriellement, et qui permet d'obtenir des mesures extrêmement fiables, tout en mettant en œuvre un nombre réduit d'éléments de détection de vibrations.

Un autre objet de l'invention vise à proposer un nouveau capteur gyroscopique vibrant dont la conception permet, par construction, de séparer de manière particulièrement efficace la gamme de fréquences du mode « tambour » parasite de celle des modes primaire et secondaire.

Un autre objet de l'invention vise à proposer un nouveau capteur gyroscopique vibrant dont la conception permet, par construction, de séparer de manière particulièrement efficace la fréquence du mode de flexion parasite de la gamme de fréquences des environnements mécaniques externes qui généralement ne dépassent pas 2 kHz.

Un autre objet de l'invention vise à proposer un nouveau capteur gyroscopique vibrant dont la forme permet de décaler significativement les fréquences du mode rotationnel parasite par rapport à celles des modes primaire et secondaire.

Un autre objet de l'invention vise à proposer un nouveau capteur gyroscopique vibrant dont le résonateur est agencé pour contrôler de manière optimale l'orientation de la vibration du résonateur, sans qu'il ne soit nécessaire de positionner de façon précise les éléments d'excitation et de détection.

Un autre objet de l'invention vise à proposer un nouveau capteur gyroscopique vibrant dont la conception permet de réduire les contraintes mécaniques susceptibles de s'exercer intempestivement sur les éléments de détection et d'excitation de la vibration entretenue dans le résonateur.

Un autre objet de l'invention vise à proposer un nouveau capteur gyroscopique vibrant dont la conception permet une transmission particulièrement efficace d'efforts d'excitation au résonateur, et réciproquement une détection fiable et précise des vibrations du résonateur.

Un autre objet de l'invention vise à proposer un nouveau capteur gyroscopique vibrant permettant de limiter l'apparition de modes parasites supplémentaires.

Les objets assignés à l'invention sont atteints à l'aide d'un capteur gyroscopique vibrant conforme à l'objet de la revendication 1.

D'autres particularités et avantages de l'invention apparaîtront plus en détails à la lecture de la description détaillée qui suit, en référence aux dessins annexés, donnés à titre d'exemples purement illustratifs et non limitatifs, dans lesquels :
- La figure 1 illustre, selon une vue schématique en perspective, un capteur gyroscopique vibrant, axisymétrique, conforme à un premier mode de réalisation de l'invention.
- La figure 2 illustre, selon une vue schématique en perspective coupée, le capteur gyroscopique vibrant de la figure 1.
- La figure 3 illustre, selon une vue schématique de dessus, le capteur gyroscopique vibrant des figures 1 et 2 sans son capot.
- La figure 4 illustre, selon une vue schématique en coupe sagittale, le capteur vibrant de la figure 3.
- La figure 5 est une vue similaire à celle de la figure 4 mais où seul le résonateur du capteur est représenté.
- La figure 6 illustre, selon une vue de dessus, le résonateur de la figure 5.
- La figure 7 illustre le résonateur d'un capteur gyroscopique vibrant, axisymétrique, conforme à un deuxième mode de réalisation de l'invention, qui ne se distingue du premier mode de réalisation des figures 1 à 6 que par le positionnement externe de ses éléments de détection et d'excitation de la vibration entretenue sur la portion proximale de la paroi latérale du résonateur, alors qu'un positionnement interne desdits éléments est au contraire mis en œuvre dans le mode de réalisation des figures 1 à 6.
- La figure 8 illustre, selon une vue schématique en perspective coupée, un résonateur d'un capteur gyroscopique vibrant, axisymétrique, conforme à un troisième mode de réalisation de l'invention, qui est identique aux modes de réalisation des figures précédentes, à la différence près qu'il met en œuvre des éléments de détection et d'excitation de la vibration entretenue positionnées à la fois intérieurement et extérieurement sur la portion proximale de la paroi latérale du résonateur.
- La figure 9 illustre, selon une vue analogue à celle de la figure 3, un capteur gyroscopique vibrant, axisymétrique, conforme à un quatrième mode de réalisation de l'invention, qui se distingue de la variante de la figure 3 uniquement par le nombre et le positionnement des oreilles de fixation de l'embase (quatre oreilles de fixation au lieu de trois dans le mode de réalisation de la figure 3).
- La figure 10 illustre, selon une vue schématique en perspective coupée, un capteur gyroscopique vibrant, axisymétrique, conforme à un cinquième mode de réalisation de l'invention, qui se distingue des variantes des figures précédentes par la conformation spécifique de la zone assurant la jonction entre la portion proximale de la paroi latérale et le pied central.
- La figure 11 illustre, selon une vue schématique en coupe sagittale, le capteur vibrant de la figure 10.

L'invention concerne un capteur gyroscopique vibrant 1, qui forme avantageusement un capteur gyroscopique vibrant, de préférence axisymétrique, à effet Coriolis, c'est-à-dire un capteur vibratoire basé sur les forces de Coriolis. Le capteur gyroscopique vibrant 1 est ainsi un capteur inertiel vibrant de type CVG (acronyme anglophone de « *Coriolis Vibratory Gyro* »). Le capteur gyroscopique vibrant 1 selon l'invention forme ainsi avantageusement un capteur conçu (i) pour mesurer un angle de rotation (fonctionnement en gyroscope), auquel cas il constitue un gyroscope vibrant et/ou (ii) pour mesurer une vitesse de rotation (fonctionnement en gyromètre), auquel cas il constitue un gyromètre vibrant, étant entendu que ledit gyromètre peut également déterminer un angle par intégration de la vitesse angulaire.

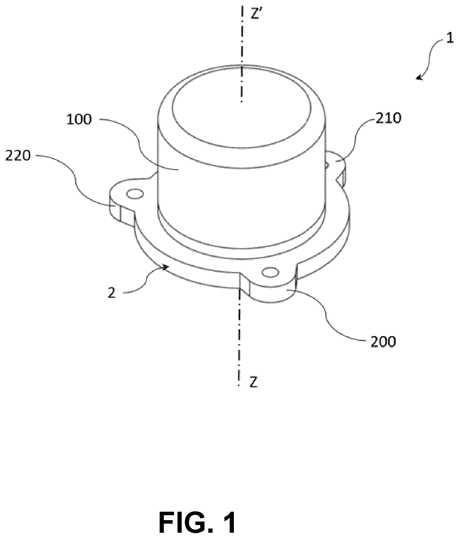

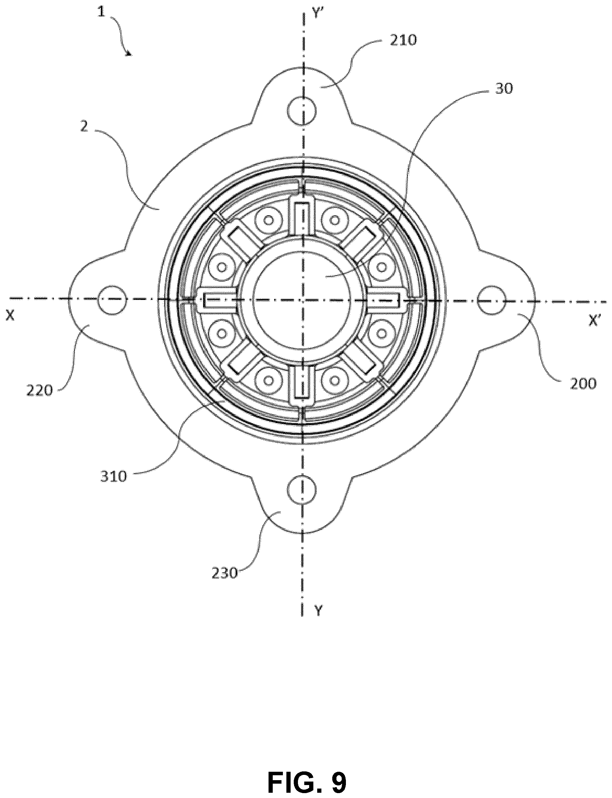

Comme illustré aux figures, le capteur gyroscopique vibrant 1 selon l'invention comprend une embase 2, qui est par exemple métallique, et assure une fonction de support. L'embase 2 constitue ainsi avantageusement un socle. L'embase 2 présente avantageusement globalement une forme de plaque avec deux faces opposées, séparées par l'épaisseur de la plaque, qui sont pourvues de conformations convexes et concaves formant des logements dont les fonctions seront précisées dans ce qui suit. L'embase 2 est avantageusement pourvue de moyens de fixation 200, 210, 220, 230, qui se présentent par exemple sous la forme d'une pluralité d'oreilles traversées chacune par un orifice afin de permettre une fixation par vissage du capteur 1 à un bâti, par exemple au bâti d'une centrale inertielle ou de tout autre équipement. Comme illustré par la figure 1, les moyens de fixation 200, 210, 220 de l'embase 2 peuvent être conçus pour assurer une fixation isostatique, auquel cas les oreilles de fixation 200, 210, 220 sont au nombre de trois réparties équi-angulairement autour d'un axe central Z-Z' qui est avantageusement normal au plan moyen dans lequel s'étendent les oreilles de fixation et/ou la plaque formant l'embase 2. De préférence, l'embase 2 présente dans ce cas une symétrie de rotation discrète du troisième ordre selon l'axe central Z-Z'. Ledit axe central Z-Z' correspond à l'axe sensible selon lequel le capteur gyroscopique vibrant 1 est conçu pour mesurer une vitesse angulaire et/ou un déplacement angulaire. Dans le mode de réalisation alternatif de la figure 9, les oreilles de fixation 200, 210, 220, 230 sont cette fois au nombre de quatre, réparties équi-angulairement autour de l'axe central Z-Z', et assurent une fixation hyperstatique, qui est certes plus encombrante que la fixation isostatique de la variante de la figure 1 mais permet de limiter les perturbations mécaniques du capteur gyroscopique vibrant 1 grâce à un alignement deux à deux des oreilles de fixation 200, 210, 220, 230 selon deux axes orthogonaux X-X', Y-Y', perpendiculaires à l'axe central Z-Z'. Dans ce mode de réalisation de la figure 9, l'embase 2 présente cette fois avantageusement une symétrie de rotation discrète du quatrième ordre selon l'axe central Z-Z'. D'autres configurations de fixation peuvent être envisagées sans pour autant que l'on sorte du cadre de l'invention, comme par exemple une couronne faisant le tour de l'embase du capteur et pincée par une plaque mise en contrainte par des vis externes.

Avantageusement, le capteur gyroscopique vibrant 1 selon l'invention comprend un capot 100 en forme de cloche, qui vient coiffer la structure vibrante (résonateur 3 décrit ci-après) du capteur 1. Ledit capot 100 est réalisé par exemple en un matériau métallique, et est avantageusement destiné à coopérer avec l'embase 2 pour délimiter avec cette dernière un espace interne destiné à accueillir la structure vibrante (résonateur 3 décrit ci-après) du capteur gyroscopique vibrant 1, afin de l'isoler et la protéger de l'environnement extérieur. Le logement ainsi formé par l'embase 2 et le capot 100 peut avantageusement être étanche au gaz, grâce à la mise en œuvre de moyens d'étanchéité appropriés disposés à l'interface entre le capot 100 et l'embase 2, ce qui permet de contrôler l'atmosphère régnant au sein du logement en question.

Le capteur gyroscopique vibrant 1 selon l'invention comprend également un résonateur 3 qui forme un corps d'épreuve destiné à vibrer en réponse à une excitation. Avantageusement le résonateur 3 présente au moins un mode de résonance d'ordre 2 se déclinant en un mode primaire et un mode secondaire orthogonaux modalement, de déformées par exemple elliptiques (cas d'un résonateur présentant une forme de révolution), et en principe de mêmes fréquences. Le résonateur 3 inclut, comme illustré aux figures, un pied central 30 par lequel le résonateur 3 est attaché à ladite embase 2. En d'autres termes, le capteur gyroscopique vibrant 1 comprend des moyens de liaison mécanique qui assurent une fixation du pied central 30 à l'embase 2. Avantageusement, lesdits moyens de liaison mécanique assurent une liaison encastrement entre le pied central 30 et l'embase 2, de façon à immobiliser le pied central 30 relativement à l'embase 2. Les moyens de liaison mécanique présentent par exemple un caractère définitif, c'est-à-dire qu'ils sont indémontables, et peuvent consister par exemple en un assemblage par soudage ou brasage du pied 30 et de l'embase 2.

De préférence, le pied 30 présente sensiblement une forme de révolution selon ledit axe central Z-Z', et s'étend longitudinalement selon ledit axe central Z-Z' entre une face extérieure 30A, qui est de préférence plane et est par exemple reçue dans un logement ménagé dans l'embase 2 (comme illustré aux figures), et une face intérieure 30B libre, qui est de préférence plane elle aussi. Avantageusement, ledit pied central 30 présente un caractère monolithique massif, c'est-à-dire qu'il est formé par une pièce monobloc, d'un seul tenant, de préférence en métal. Ainsi, ledit pied central 30 ne se présente pas sous la forme d'une paroi, et en particulier d'une paroi tubulaire, mais présente au contraire un caractère plein.

Le résonateur 3 inclut également une paroi latérale 31, qui est elle aussi de préférence en métal, mais qui peut être alternativement en matériau amorphe comme la silice, ou en matériau monocristallin comme le quartz. Ladite paroi latérale 31 est distincte dudit pied 30, ce qui signifie en particulier que le pied 30 ne fait pas partie de la paroi latérale 31. Le pied 30 relie avantageusement la paroi latérale 31 à l'embase 2. Avantageusement et comme illustré, le pied 30 présente une section réduite par rapport à celle de l'embase et celle de la paroi latérale 31, de sorte que le capteur gyroscopique vibrant 1 présente une restriction de section entre l'embase 2 et la paroi latérale 31, laquelle restriction de section correspond au pied 30. La paroi latérale 31 s'élève à partir du pied 30, autour et à partir de la périphérie de ce dernier, jusqu'à un bord terminal libre 310 délimitant une ouverture qui donne accès à un volume intérieur V0 délimitée par le pied 30 et la paroi latérale 31. Le résonateur 3 présente ainsi avantageusement une forme générale de récipient ouvert du côté opposé à l'embase 2, définissant une cavité à l'intérieur de laquelle il est possible d'accéder par l'extérieur, via l'ouverture délimitée par le bord terminal libre 31. Avantageusement, le pied central 30 et la paroi latérale 31 forment une seule et même pièce d'un seul tenant, la paroi latérale 31 venant avantageusement de matière avec le pied 30. Le pied 30 et la paroi latérale 31 forment en d'autres termes une seule et même pièce monobloc, qui est de préférence entièrement métallique, lesdits pied 30 et paroi latérale 31 étant en outre distincts l'un de l'autre.

Conformément à l'invention, la paroi latérale 31 comprend une portion proximale 311 qui s'élève à partir et autour du pied central 30, et est distincte de ce dernier. Ladite paroi latérale 31 présente avantageusement une symétrie de rotation par rapport à l'axe central Z-Z', qu'il s'agisse d'une symétrie continue (symétrie de révolution - mode de réalisation non illustré aux figures), ou d'une symétrie de rotation discrète d'ordre n, avec n ≥ 3, et de façon plus préférentielle n ≥ 4, et de façon encore plus préférentielle n ≥ 8. Avantageusement, la portion proximale 311 présente une face externe 311A qui s'étend du côté de l'embase 2, c'est-à-dire de préférence en regard de cette dernière, et une face interne 311B opposée, qui s'étend en regard du volume intérieur V0. Lesdites face externe 311A et face interne 311B sont avantageusement sensiblement parallèles entre elles.

La paroi latérale 31 comprend également une portion distale 312, de forme générale cylindrique, qui s'étend dans le prolongement de la portion proximale 311 jusqu'audit bord terminal libre 310. De préférence, ladite portion distale 312 s'étend ainsi à partir de la portion proximale 311 jusqu'au bord terminal libre 310. Comme illustré aux figures, la portion distale 312 présente avantageusement une forme générale de cylindre droit, et de façon encore plus avantageuse une forme générale de cylindre circulaire droit. Dans ce mode de réalisation avantageux, la portion distale 312 présente une forme générale de révolution autour de l'axe central Z-Z'.

Comme illustré aux figures, la portion distale 312, qui présente avantageusement une forme générale de cylindre circulaire droit, s'étend préférentiellement entre un bord circulaire primaire, solidaire de la portion proximale 311 et un bord circulaire secondaire qui correspond audit bord terminal libre 310, ledit bord circulaire primaire étant disposé entre l'embase 2 et le bord circulaire secondaire. De préférence, la portion distale cylindrique 312 présente une face distale intérieure 312A disposée en regard du volume intérieur V0, et une face distale extérieure opposée 312B. Avantageusement, la face distale intérieure 312A présente un caractère uniforme et continu. De préférence, la distance qui sépare la face distale intérieure 312A de l'axe central Z-Z' est constante en tout point de ladite face distale intérieure 312A, sur sensiblement toute la hauteur de cette dernière (ladite hauteur étant mesurée selon une direction parallèle à l'axe central Z-Z'). Avantageusement, la portion distale 312 présente un diamètre intérieur D compris entre 10 et 40 mm, de préférence compris entre 20 et 30 mm, de façon encore plus préférentielle sensiblement égal à 23 mm. Le diamètre D en question correspond ici au diamètre interne du cylindre droit formant la portion proximale 312 de la paroi latérale 31, c'est-à-dire au diamètre de la face distale intérieure 312A. Avantageusement, la portion distale 312 présente une épaisseur comprise entre 0,5 et 3 mm, de préférence entre 0,5 et 1,5 mm. De préférence, l'épaisseur de la portion distale cylindrique 312 varie selon la hauteur, avec par exemple :
- une portion principale distale qui s'étend avantageusement jusqu'audit bord terminal libre 310 et dont l'épaisseur est sensiblement constante et présente une première valeur E1, qui est par exemple égale à environ 1 mm, et
- une portion de raccordement distale qui s'étend entre ladite portion principale distale 312 et la portion proximale 311, et dont l'épaisseur, préférentiellement constante, présente une deuxième valeur E2 inférieure à la première valeur E1.

Une telle variation d'épaisseur permet d'ajuster au mieux les modes de résonance du résonateur 3, et contribue également à améliorer la détection des vibrations. Il est cependant parfaitement envisageable que l'épaisseur de la portion distale cylindrique 312 soit constante sur toute la hauteur de cette dernière, sans pour autant que l'on sorte du cadre de l'invention.

Le capteur gyroscopique vibrant 1 comprend une pluralité de dispositifs d'excitation attachée à ladite portion proximale 311 pour exciter ledit résonateur 3 en vibration, et plus précisément pour exciter en vibration la portion distale cylindrique 312, et notamment lesdits modes primaire et secondaire de vibration symétriques de cette dernière. Le capteur gyroscopique vibrant 1 comprend également une pluralité de dispositifs de détection attachée à ladite portion proximale 311 pour détecter des vibrations du résonateur 3, et en particulier les vibrations de la portion distale cylindrique 312 excitée par les dispositifs d'excitation attachés à la portion proximale 311. Ce positionnement des dispositifs d'excitation et de détection sur et contre la portion proximale 311 permet notamment de limiter les éventuels effets d'amortissement susceptibles de générer des erreurs de mesure. Les éléments de détection et d'excitation peuvent être de natures similaires ou différentes, et reposer par exemple sur un principe de détection, respectivement d'excitation, de nature électrostatique, optique, électromagnétique, et/ou piézoélectrique, sans que cette liste ne soit limitative.

Avantageusement, le capteur gyroscopique vibrant 1 comprend des éléments piézoélectriques 14, 15, 16, 17, 18, 19, 20, 21, 22, 23, 24 qui forment lesdits dispositifs d'excitation et lesdits dispositifs de détection. Les éléments piézoélectriques en question sont ainsi conçus pour d'une part impartir, par l'intermédiaire de la portion proximale 311 à laquelle ils sont fixés (par exemple par collage ou par brasage) des vibrations à la portion distale 312, pour exciter en particulier les modes primaire et secondaire symétriques de résonance, et pour d'autre part détecter, là encore par l'intermédiaire de la portion proximale 311 à laquelle ils sont attachés, les vibrations de la portion distale 312. Les éléments piézoélectriques assurent ainsi une double fonction, d'excitation vibratoire d'une part et de détection vibratoire d'autre part.

Conformément à une caractéristique importante de l'invention, la portion proximale 311 s'évase progressivement du pied 30 vers la portion distale 311. Comme illustré aux figures, la face externe 311A et la face interne 311B s'évasent progressivement du pied 30 vers la portion distale 311, c'est-à-dire que lesdites face externe 311A et face interne 311B s'éloignent toutes deux progressivement de l'axe central X-X' au fur et à mesure qu'elles s'élèvent à partir du pied 30 en direction de la portion distale 312. En d'autres termes, la portion proximale 311 présente, au niveau de son raccordement avec le pied 30, une section qui est plus petite que la section qu'elle présente au niveau de son raccordement avec la portion distale 312. La portion proximale 311 s'éloigne ainsi progressivement de l'axe central Z-Z' au fur et à mesure qu'elle s'élève à partir du pied 30 en direction de la portion distale 312. De préférence, le pied 30 ne présente pas quant à lui une forme évasée mais plutôt une forme sensiblement droite comme illustré aux figures. Avantageusement, la portion proximale 311 s'étend entre d'une part un premier bord circulaire 3110 raccordé audit pied 30, en l'espèce latéralement à ce dernier, et d'autre part un deuxième bord circulaire 3111 raccordé à la portion distale 312 et à partir duquel s'élève ladite portion distale 312 jusqu'audit bord terminal libre 310. Lesdits premier et deuxième bords circulaires 3110, 3111 présentent respectivement un premier et un deuxième diamètre, ce dernier étant sensiblement égal ou légèrement inférieur audit diamètre D de la portion distale 312. En raison du caractère évasé de la portion proximale 311, ledit deuxième diamètre est supérieur audit premier diamètre. De façon encore plus avantageuse, le premier diamètre représente au plus 60 % du deuxième diamètre, et de façon encore plus préférentielle au plus 50 % du deuxième diamètre. Le recours à une portion proximale 311 présentant un profil général de pavillon, dont la section s'accroît progressivement, selon la hauteur (matérialisée par l'axe central Z-Z'), du pied 30 vers la portion distale 312, permet, de façon remarquable, de faciliter le rejet des modes parasites, et en particulier du mode tambour parasite, en faisant en sorte que ce dernier présente une fréquence bien supérieure à celle des modes primaire et secondaire. Il s'avère en effet que le recours à une portion proximale 311 qui est inclinée par rapport à l'axe central Z-Z', c'est à dire qui n'est ni parallèle ni perpendiculaire audit axe central Z-Z', permet d'accroître la raideur du résonateur 3 en particulier pour le mode tambour parasite, et dans une moindre mesure pour le mode en flexion parasite. Grâce à cette caractéristique, la fréquence du mode parasite tambour n'est pas du tout voisine des gammes de fréquences des modes primaire et secondaire de vibration du résonateur 3 utilisés pour mesurer la rotation angulaire, ce qui conduit à un capteur gyroscopique 1 particulièrement performant et robuste. Également, cette configuration permet de remonter la fréquence du mode en flexion parasite pour échapper significativement à la plage des fréquences s'étalant jusqu'à 2 kHz.

Avantageusement, afin d'optimiser cet effet de différenciation de fréquences pour les modes primaire et secondaire d'une part et les modes parasites (notamment tambour) d'autre part, lesdites paroi latérale 31 et portion proximale 311 (qui fait partie de la paroi latérale 31) s'élèvent respectivement sur une hauteur totale HT et une première hauteur H1, mesurées toutes deux selon une direction parallèle à l'axe central Z-Z', qui sont telles que ladite première hauteur H1 représente au moins 15 % de ladite hauteur totale HT, de préférence au moins 25 % de ladite hauteur totale HT.

De façon particulièrement préférentielle, et conformément au mode de réalisation illustré aux figures, ladite portion proximale 311 présente un profil en tronc de cône, et plus précisément un profil en tronc de cône circulaire droit. En d'autres termes, la portion proximale 311 s'étend avantageusement selon une surface (fictive) généralement tronconique, c'est-à-dire une portion de cône qui diverge à partir du pied 30 vers l'extérieur et vers la portion distale 312. Le recours à une portion proximale de forme générale tronconique d'axe Z-Z' pour relier le pied 30 à la portion distale cylindrique permet d'obtenir un niveau de rigidité optimal en particulier pour le mode tambour parasite, permettant de décaler vers le haut la fréquence de ce mode parasite de façon extrêmement efficace.

De préférence, ledit cône présente un axe de symétrie, qui correspond en l'espèce à l'axe central Z-Z', et est incliné par rapport à un plan P perpendiculaire audit axe de symétrie d'un angle α compris entre 10° et 45°, de préférence entre 25° et 35°, de façon encore plus préférentielle environ égal à 30°. Le recours à une portion proximale 311 de profil général tronconique incliné avec un tel angle conduit à des fréquences particulièrement élevées pour le mode parasite tambour, ce qui facilite le rejet de ce mode parasite puisque les fréquences de ce dernier sont bien supérieures à celles des modes de résonance primaire et secondaire utilisées pour la mesure d'angle et/ou de vitesse de rotation. Par exemple, il est possible d'obtenir des modes de résonance primaire et secondaire dont les fréquences sont comprises dans la gamme 5000 - 8000 Hz, tandis que la fréquence du mode tambour parasite est supérieure à 10 000 Hz, pour un résonateur dont la portion distale est en forme de cylindre droit avec un diamètre intérieur d'environ 23 mm et une épaisseur de paroi d'environ 1 mm et dont la portion proximale est en forme de surface tronconique avec une inclinaison, correspondant audit angle α, d'environ 30°.

La portion proximale 311 inclut une pluralité de bras 6, 7, 8, 9, 10, 11, 12, 13 séparés les uns des autres par des espaces libres et disposés autour dudit pied 30 selon une répartition équiangulaire. Chacun desdits bras 6, 7, 8, 9, 10, 11, 12, 13 s'étend longitudinalement entre une extrémité centrale disposée du côté du pied 30, et de préférence reliée à ce dernier, et une extrémité périphérique disposée du côté de la portion distale 312, et de préférence reliée à cette dernière. La portion proximale 311 est formée par une surface discrète, discontinue, lesdits bras 6, 7, 8, 9, 10, 11, 12, 13 étant distants et distincts les uns des autres et s'étendant radialement par rapport à l'axe central Z-Z', à partir du pied 30. Dans ce cas, chaque bras 6, 7, 8, 9, 10, 11, 12, 13 s'étend selon une surface fictive évasée, qui est avantageusement de forme tronconique comme déjà exposé dans ce qui précède. Cela signifie que chacun des bras 6, 7, 8, 9, 10, 11, 12, 13 est avantageusement incliné d'un angle α par rapport audit plan P perpendiculaire à l'axe central Z-Z, ledit angle α étant par exemple compris entre 10 et 45°, de préférence compris entre 25 et 35°, de façon encore plus préférentielle environ égal à 30° comme évoqué précédemment. Dans ce mode de réalisation préférentiel illustré aux figures, la portion proximale 311 présente une symétrie de rotation discrète d'ordre n selon l'axe central Z-Z', avec avantageusement n ≥ 3, et de façon encore plus préférentielle n ≥ 4, le nombre n correspondant avantageusement au nombre des bras 6, 7, 8, 9, 10, 11, 12, 13 formant ladite portion proximale 311. De manière particulièrement avantageuse, la portion proximale 311 inclut huit bras 6, 7, 8, 9, 10, 11, 12, 13, auquel cas elle présente une symétrie de rotation discrète d'ordre 8 (n=8) selon l'axe central Z-Z'. Il est cependant parfaitement envisageable de recourir à un nombre de bras inférieur ou supérieur, et par exemple de recourir à 16 bras, auquel cas la portion proximale 311 présente cette fois une symétrie de rotation discrète d'ordre 16 selon l'axe central Z-Z'. Il est également tout à fait envisageable que la portion proximale 311 soit formée par une surface continue, par exemple par une surface tronconique (auquel cas la portion proximale 311 présente une forme de révolution autour de l'axe central Z-Z'), éventuellement percée ponctuellement d'ouvertures traversantes équiangulairement réparties.

Avantageusement, chacun des bras 6, 7, 8, 9, 10, 11, 12, 13 s'étend longitudinalement de façon rectiligne entre ses extrémités centrale et périphérique. Chaque bras 6, 7, 8, 9, 10, 11, 12, 13 est par exemple formé par une patte rigide qui relie le pied 30 à la portion distale cylindrique 312. Les bras 6, 7, 8 ,9, 10, 11, 12, 13 forment ainsi des rayons plats, qui s'étendent radialement par rapport à l'axe central Z-Z', autour et à partir du pied 30 pour relier ce dernier à la portion distale 312.

Lesdits dispositifs d'excitation et lesdits dispositifs de détection, préférentiellement formés par les éléments piézoélectriques 14, 15, 16, 17, 18, 19, 20, 21, 22, 23, 24, sont attachés auxdits bras 6, 7, 8, 9, 10, 11, 12, 13, de sorte que chacun desdits bras porte au moins un, et éventuellement deux (ou plus) éléments piézoélectriques 14, 15, 16, 17, 18, 19, 20, 21, 22, 23, 24. Les dispositifs d'excitation et de détection avantageusement formés par les éléments piézoélectriques 14, 15, 16, 17, 18, 19, 20, 21, 22, 23, 24 sont ainsi avantageusement répartis équiangulairement autour du pied central 30, puisqu'ils s'étendent chacun au droit de l'un des bras 6, 7, 8, 9, 10, 11, 12, 13, sur et contre ce dernier. Le recours à des bras 6, 7, 8, 9, 10, 11, 12, 13 séparés les uns des autres pour transmettre, au moyen des éléments piézoélectriques dont ils sont pourvus, des vibrations à la portion distale 312, permet de forcer les vibrations du résonateur 3 à adopter une orientation définie, ce qui permet d'obtenir des performances accrues, de manière extrêmement simple et efficace.

Avantageusement, chaque bras 6, 7, 8, 9, 10, 11, 12, 13 présente au moins une face plane sur et contre laquelle est disposé et fixé l'un desdits éléments piézoélectriques 14, 15, 16, 17, 18, 19, 20, 21, 22, 23, 24 formant dispositif d'excitation et de détection. Le recours à une face plane comme support de fixation des éléments piézoélectriques 14, 15, 16, 17, 18, 19, 20, 21, 22, 23 permet d'obtenir un excellent couplage électromécanique, qui favorise la précision et la fiabilité des mesures. Par exemple, chacun desdits bras 6, 7, 8, 9, 10, 11, 12, 13 inclut au moins :
- un tronçon principal 6A, 7A, 8A, 9A, 10A, 11A, 12A, 13A qui s'étend à partir de ladite extrémité centrale disposée du côté du pied 30,
- un tronçon terminal 6B, 7B, 8B, 9B, 10B, 11B, 12B, 13B de section réduite par rapport à celle du tronçon principal 6A, 7A, 8A, 9A, 10A, 11A, 12A, 13A et qui s'étend entre ce dernier et ladite extrémité périphérique disposée du côté de la portion distale 312.

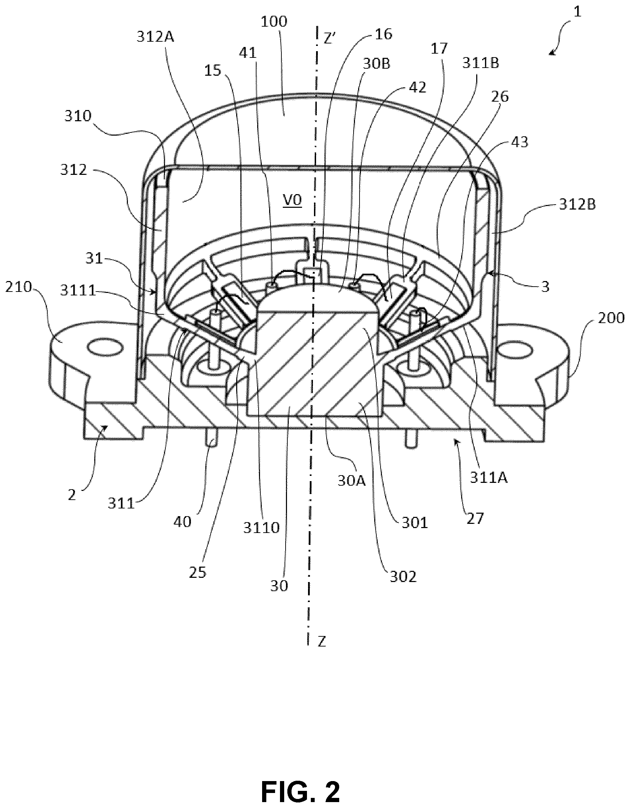

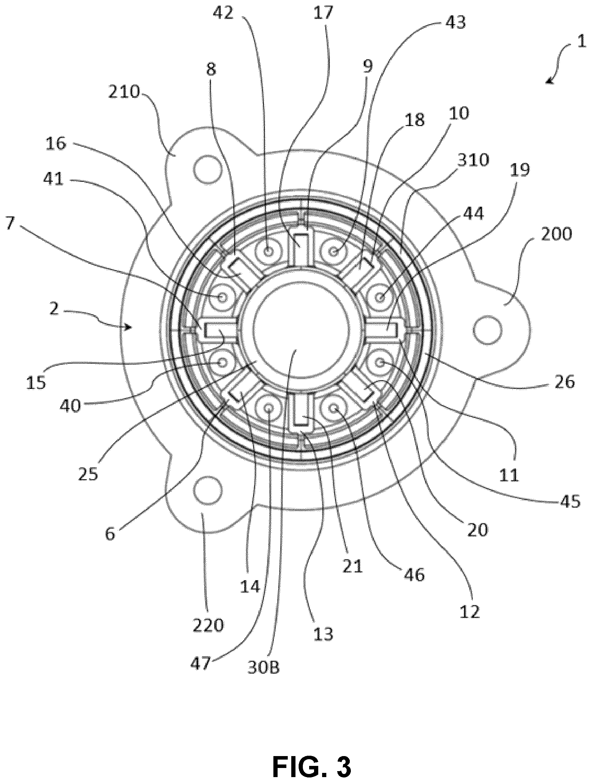

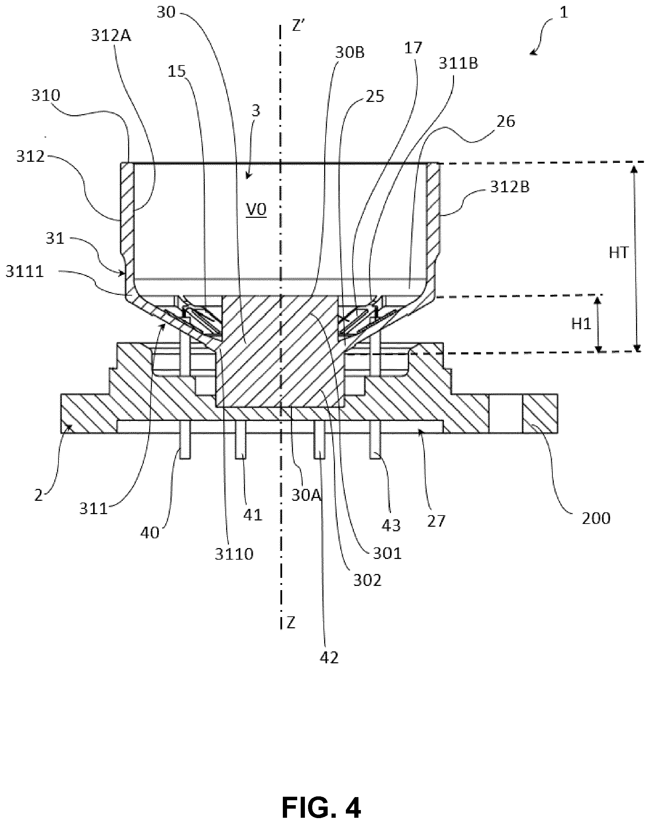

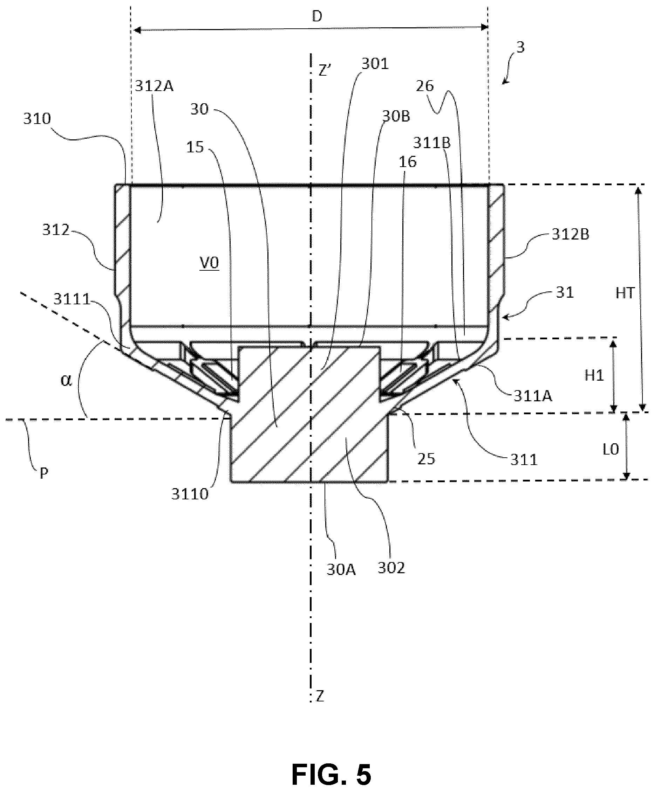

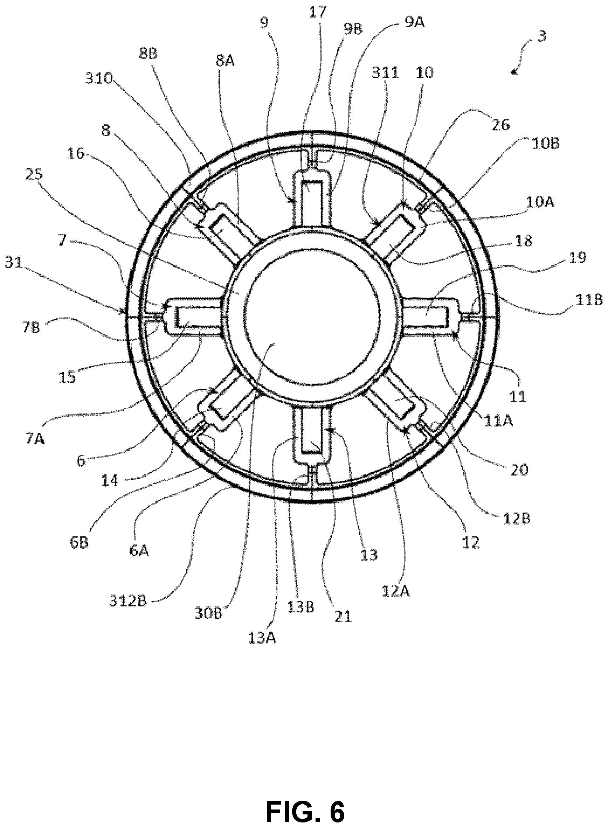

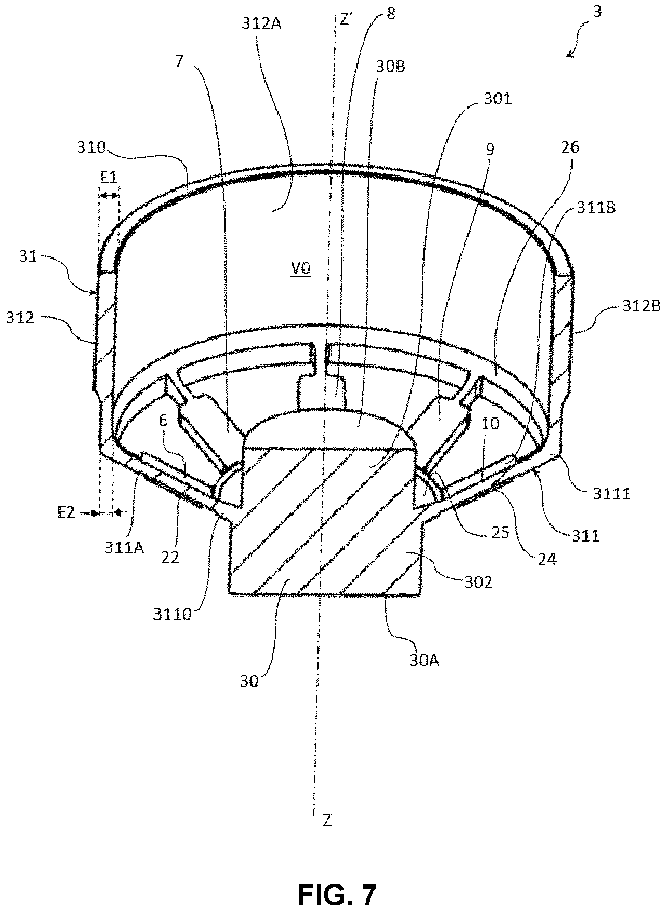

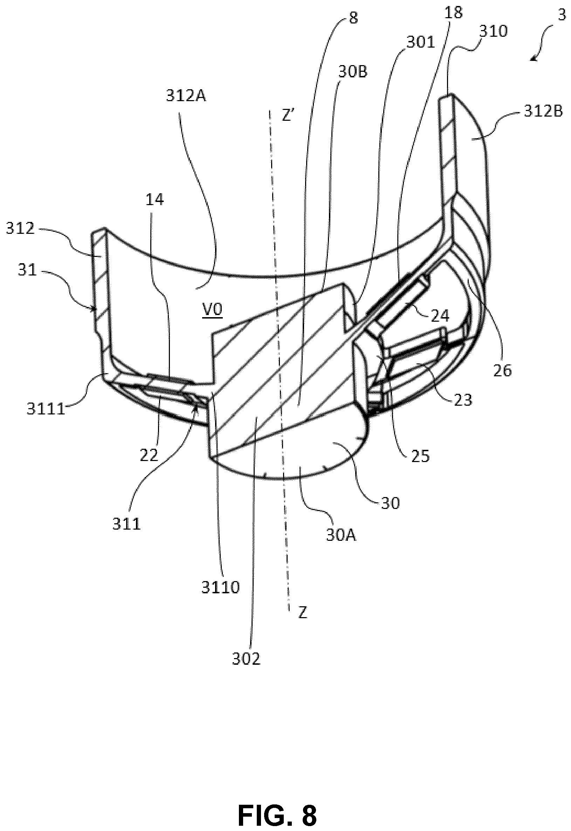

De préférence, le tronçon terminal de section réduite 6B, 7B, 8B, 9B, 10B, 11B, 12B, 13B s'étend dans le prolongement du tronçon principal 6A, 7A, 8A, 9A, 10A, 11A, 12A, 13A, avec de préférence une rupture franche de section entre le tronçon principal 6A, 7A, 8A, 9A, 10A, 11A, 12A, 13A et le tronçon terminal 6B, 7B, 8B, 9B, 10B, 11B, 12B, 13B qui le prolonge. De préférence, les éléments piézoélectriques 14, 15, 16, 17, 18, 19, 20, 21, 22, 23, 24 sont disposés sur et contre le tronçon principal 6A, 7A, 8A, 9A, 10A, 11A, 12A, 13A, qui présente une forme de patte plate avec deux faces principales opposées contribuant à former respectivement la face externe 311A et la face interne 311B de la paroi proximale 311. Dans le mode de réalisation des figures 1 à 6, les éléments piézoélectriques sont disposés sur les bras 6, 7, 8, 9, 10, 11, 12, 13 uniquement du côté de la face interne 311B, à l'intérieur du volume intérieur V0. Ce positionnement intérieur des éléments piézoélectriques, sur la face interne 311B de la portion proximale 311 (qui présente très avantageusement un profil tronconique), permet de conférer un caractère particulièrement compact au capteur gyroscopique vibrant 1 selon l'invention, en permettant d'approcher ainsi au plus près l'embase 2 du résonateur 3, sans être gêné par la présence des dispositifs d'excitation et de détection qui sont disposés dans le volume intérieur V0. La mise en œuvre de dispositifs d'excitation et de détection attachés à la face interne 311B de la portion proximale 311 permet en outre de favoriser la précision des mesures d'angle et de vitesse angulaire. Alternativement, dans le mode de réalisation de la figure 7, les éléments piézoélectriques sont exclusivement disposés sur et contre les bras 6, 7, 8, 9, 10, 11, 12, 13, du côté de la face externe 311A. Enfin, dans le mode de réalisation alternatif de la figure 8, chaque bras est équipé de deux éléments piézoélectriques disposés sur chacune de ses faces opposées, l'un du côté de la face externe 311A et l'autre du côté de la face interne 311B opposée, chaque bras étant ainsi interposé entre deux éléments piézoélectriques.

Dans tous les cas de figure susvisés, chaque élément piézoélectrique est avantageusement porté par le tronçon principal 6A, 7A, 8A, 9A, 10A, 11A, 12A, 13A du bras 6, 7, 8, 9, 10,11, 12, 13 concerné. Grâce à cette configuration particulière, les éléments piézoélectriques sont en mesure non seulement de transmettre de manière optimale au résonateur 3 des contraintes mécaniques vibratoires entraînant l'entrée en résonance de la partie distale 312 selon les modes primaire et secondaire, mais aussi d'assurer une détection précise et fiable des vibrations, tout en limitant les contraintes mécaniques parasites, notamment en torsion, susceptibles de s'appliquer sur ces mêmes éléments piézoélectriques selon les directions nodales. En effet, chaque tronçon terminal 6B, 7B, 8B, 9B, 10B, 11B, 12B, 13B de section réduite joue le rôle d'une charnière qui évite de transmettre au tronçon principal 6A, 7A, 8A, 9A, 10A, 11A, 12A, 13A d'éventuels efforts de torsion résultant des vibrations du résonateur 3. L'étranglement formé par le tronçon terminal 6B, 7B, 8B, 9B, 10B, 11B, 12B, 13B de section réduite apporte ainsi localement une souplesse accrue en rotation qui limite tout effet local de torsion selon les directions nodales (à 45° des directions de vibration des modes primaire et secondaire) dans le tronçon principal 6A, 7A, 8A, 9A, 10A, 11A, 12A, 13A correspondant. Cette géométrie particulière, avec un tronçon principal qui porte un ou plusieurs éléments piézoélectriques de détection et d'excitation, et un tronçon terminal de section réduite qui joue un rôle de charnière pour relier le tronçon principal à la portion distale 312, permet d'opérer par construction un filtrage des contraintes mécaniques parasites en rotation et/ou en torsion susceptibles de perturber les mesures. Dans ce mode de réalisation particulier, l'efficacité des éléments piézoélectriques est améliorée non seulement en matière d'activation des modes de résonance, mais également en matière de précision de la détection des vibrations, grâce à l'effet de liaison mécanique souple obtenu par la présence de la restriction de section à l'extrémité du tronçon principal de chaque bras.

Avantageusement, la portion proximale 311 comprend une première collerette 25 qui s'étend à partir et autour du pied 30, c'est-à-dire que ladite première collerette 25 forme une jupe radiale de forme annulaire, qui suit le profil évasé de la portion proximale 311, et s'étend par exemple selon un profil tronconique à partir du pied 30 où elle prend naissance. Ladite première collerette 25 présente avantageusement une surface continue, pleine. Elle forme ainsi un rebord en saillie du pied 30, chaque extrémité centrale de chacun desdits bras 6, 7, 8, 9, 10, 11, 12, 13 étant solidaire de ladite première collerette 25, comme illustré aux figures. Avantageusement, la portion proximale 311 comprend une deuxième collerette 26 qui s'étend à partir de la portion distale 312, vers l'intérieur du résonateur 3, c'est-à-dire en direction de l'axe central Z-Z'. Avantageusement, chaque extrémité périphérique de chacun desdits bras 6, 7, 8, 9, 10, 11, 12, 13 est solidaire de ladite deuxième collerette 26, comme illustré aux figures. Comme illustré aux figures, ladite deuxième collerette 26 s'étend avantageusement à partir du bord circulaire primaire de la portion distale 312, en direction du pied 30, selon le profil évasé de la portion proximale 311, et par exemple selon un profil tronconique. Grâce à la présence d'au moins l'une desdites première et deuxième collerettes 25, 26, les contraintes d'excitation vibratoires produites par les éléments piézoélectriques attachés aux bras 6, 7, 8, 9, 10, 11, 12, 13 peuvent être communiquées de manière extrêmement efficace à la portion distale 312 afin de faire rentrer cette dernière en résonance selon les modes primaire et secondaire. Réciproquement, cette configuration à une ou deux collerettes 25, 26 permet également d'améliorer la détection des vibrations par les éléments piézoélectriques en question.

Avantageusement, le capteur gyroscopique vibrant 1 comprend des moyens électroniques de traitement et de commande, qui incluent par exemple une carte électronique (non illustrée) logée au moins en partie dans l'embase 2, de préférence dans un logement 27 ménagé à la surface externe de l'embase 2, du côté opposé à celui à partir duquel s'étend le résonateur 3. L'embase 2 s'étend ainsi avantageusement entre la carte électronique d'une part et le résonateur 3 d'autre part. Afin de relier électriquement les éléments piézoélectriques 14, 15, 16, 17, 18, 19, 20, 21, 22, 23, 24, qui forment préférentiellement les dispositifs d'excitation et de détection, à la carte électronique précitée, le capteur gyroscopique vibrant 1 comprend avantageusement des tiges 40, 41, 42, 43, 44, 45, 46, 47 conductrices (c'est-à-dire qui sont réalisées en un matériau électriquement conducteur, par exemple métallique). Lesdites tiges conductrices 40, 41, 42, 43, 44, 45, 46, 47 sont connectés électriquement auxdits éléments piézoélectriques 14, 15, 16, 17, 18, 19, 20, 21, 22, 23, 24 par des micro-câbles. Chaque tige conductrice 40, 41, 42, 43, 44, 45, 46, 47 présente avantageusement un caractère sensiblement rigide, tandis que les micro-câbles présentent un caractère souple et flexible, et sont par exemple réalisés en métal (de préférence en aluminium ou en or). La masse effective de chaque micro-câble est avantageusement négligeable, de façon à ne pas influer sur la qualité des mesures obtenues au moyen du capteur gyroscopique vibrant 1. Chaque tige conductrice 40, 41, 42, 43, 44, 45, 46, 47 présente quant à elle avantageusement des dimensions et forme adaptées pour que les fréquences de résonance de chaque tige soient nettement supérieures à 8 000 Hz, ce qui permet de limiter la survenance de modes parasites supplémentaires associés aux tiges. Chaque tige conductrice 40, 41, 42, 43, 44, 45, 46, 47 est avantageusement disposée en correspondance respective avec l'un desdits espaces libres qui séparent les bras 6, 7, 8, 9, 10, 11, 12, 13 les uns des autres. De cette façon, les micro-câbles peuvent être aisément reliés aux éléments piézoélectriques. Les tiges conductrices sont de préférence agencées pour ne pas pénétrer, ou pénétrer de manière extrêmement limitée (par exemple sur moins de 10 %, et de préférence moins de 5 %, de façon encore plus préférentielle moins de 1 %, de leur hauteur) dans le volume intérieur V0, ce qui permet là encore de limiter le risque de perturbation des mesures. Plus précisément, chaque tige conductrice 40, 41, 42, 43, 44, 45, 46, 47 s'étend de préférence entre une extrémité inférieure, qui est connectée électriquement à la carte électronique disposée dans le logement 27, et une extrémité supérieure au niveau de laquelle est attaché le micro-câble qui relie la tige conductrice concernée à l'un des éléments piézoélectriques précités, et plus précisément à un élément piézoélectrique disposé de façon adjacente à l'espace libre en regard duquel la tige conductrice s'étend. Les tiges conductrices 40, 41, 42, 40, 44, 45, 46, 47 traversent avantageusement une paroi de support de l'embase 2, par des passages ménagés à travers ladite paroi de support et qui sont munis de traversées isolantes (par exemple en verre) formant localement une gaine électriquement isolante qui entoure chaque tige conductrice pour éviter qu'elle n'entre en contact avec ladite paroi de support, laquelle est de préférence métallique. Les tiges conductrices 40, 41, 42, 43, 44, 45, 46, 47 traversent ainsi l'embase 2 jusqu'à émerger dans le logement 27, où elles sont connectées électriquement à la carte électronique.

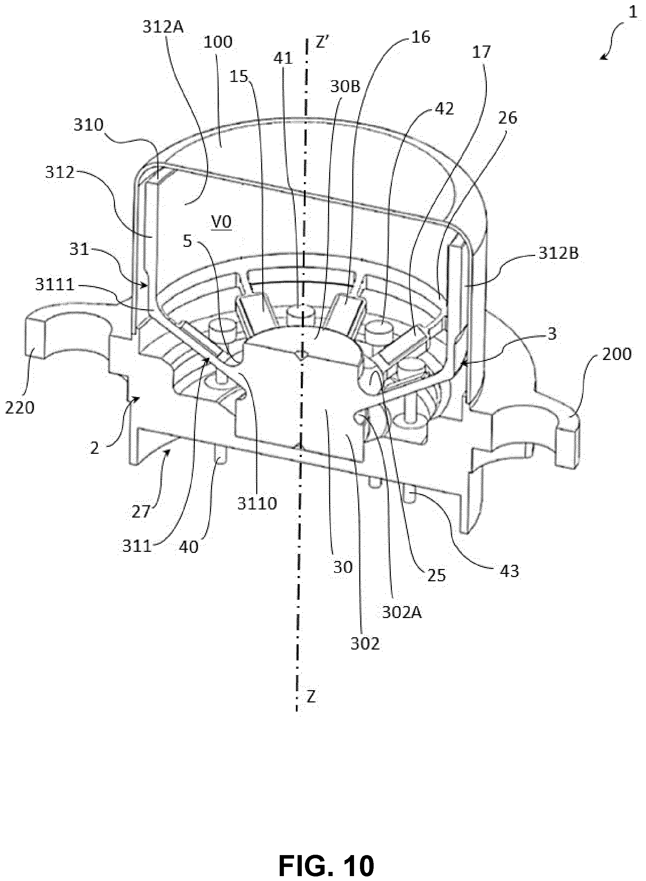

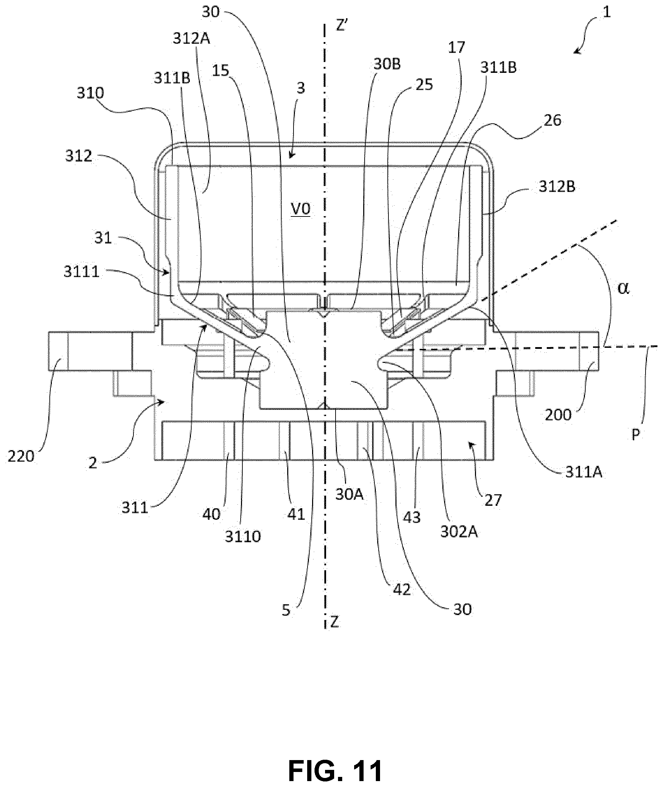

Avantageusement, le pied 30 comprend une portion intérieure 301 en saillie du côté de la face interne 311B, c'est-à-dire qui s'étend dans le volume intérieur V0, ladite portion intérieure 301 se terminant par la face intérieure libre 30B. De préférence, et comme illustré par exemple par les figures 10 et 11, le résonateur 3 comprend un congé de raccordement 5 qui s'étend autour de ladite portion intérieure 301, de préférence à distance de ladite face intérieure libre 30B, pour raccorder ladite portion intérieure 301 à ladite face interne 311B. Le congé de raccordement 5 présente avantageusement une forme générale de révolution autour dudit axe Z-Z'. De préférence, ledit congé de raccordement 5 présente un rayon de courbure au moins égal à 1 mm, de préférence au moins égal à 2 mm. Le congé de raccordement 5 forme ainsi une surface de jonction incurvée, qui assure un raccordement progressif de la paroi latérale extérieure du pied 30 à la face interne 311B de la portion proximale 311, ledit congé de raccordement 5 venant de préférence sensiblement tangenter le pied 30 et la face interne 311B, comme illustré aux figures 10 et 11. Grâce à la présence du congé de raccordement 5, en particulier lorsque ce dernier présente un rayon de courbure au moins égal à 2 mm, la fréquence du mode rotationnel parasite peut être portée à un niveau élevé, bien au-delà de la plage de fréquences des modes primaire et secondaire. Cette caractéristique contribue ainsi à faciliter le rejet du mode rotationnel parasite.

Avantageusement, le pied central 30 comprend une portion extérieure 302 en saillie du côté de la face externe 311A de la portion proximale 311. Avantageusement, ladite portion extérieure 302 du pied 30 s'étend longitudinalement, selon l'axe central Z-Z', entre la face extérieure 30A et ledit premier bord circulaire 3110. La portion extérieure 302 se termine ainsi avantageusement par la face extérieure 30A, laquelle vient se loger dans une concavité de forme conjuguée ménagée à la surface de l'embase 2. Avantageusement, ladite portion extérieure 302 présente une restriction de section locale 302A, comme illustré aux figures 10 et 11. Ladite restriction de section locale 302A forme avantageusement une surface concave à laquelle se raccorde ladite face externe 311A. Ladite restriction de section locale 302A se présente par exemple sous la forme d'une gorge circulaire présentant une section sensiblement en U, avec un fond arrondi, ménagée localement à la surface de la portion extérieure 302, sur tout le périmètre de cette dernière. De préférence, le fond de la gorge présente un rayon de courbure au moins égal à 1 mm, de préférence au moins égal à 2 mm. Avantageusement, la face externe 311A s'étend, au moins localement, dans le prolongement de la paroi de la gorge circulaire en question. Grâce à la présence de cette diminution locale de diamètre du pied central 30, au voisinage de la région de raccordement du pied 30 avec la portion proximale 311, sous cette dernière (c'est-à-dire entre l'embase 2 et la face externe 311A), une certaine souplesse mécanique est obtenue au niveau de la liaison entre la portion proximale 311 et le pied central 30, qui contribue à un filtrage naturel des modes parasites et permet également de compenser dans une certaine mesure l'amortissement généré par le joint de brasure, ou éventuellement la colle conductrice, qui assure préférentiellement la liaison mécanique entre le pied central 30 et l'embase 2. Par exemple, la mise en œuvre conjuguée du congé interne 5 et de la restriction de section locale 302A, avec chacun un rayon de courbure d'environ 2 mm, permet de porter la fréquence du mode rotationnel parasite bien au-delà de celles des modes primaire et secondaire. Aussi, le recours à un pied 30 présentant une courte longueur libre (c'est-à-dire une portion extérieure 302 libre de faible hauteur) permet d'augmenter la fréquence du mode de flexion parasite à plus de 2 500 Hz, voire 3 000 Hz. Pour cela, la longueur L0 de ladite portion extérieure 302 entre lesdits face extérieure 30A et premier bord circulaire 3110, mesurée selon l'axe central Z-Z', est avantageusement inférieure ou égale à 5 mm, de préférence comprise entre 2 et 5 mm.

## Revendications

1. Capteur gyroscopique vibrant (1) comprenant :
- une embase (2),
- un résonateur (3) qui inclut un pied central (30) par lequel le résonateur (3) est attaché à ladite embase (2) et une paroi latérale (31) qui s'élève à partir dudit pied (30) jusqu'à un bord terminal libre (310) délimitant une ouverture,
ladite paroi latérale (31) comprenant une portion proximale (311) qui s'élève à partir et autour dudit pied (30) ainsi qu'une portion distale (312) de forme généralement cylindrique qui s'étend dans le prolongement de ladite portion proximale (311) jusqu'audit bord terminal libre (310), ladite portion proximale (311) s'évasant progressivement à partir du pied (30) vers la portion distale (312),
le capteur étant **caractérisé en ce que** ladite portion proximale (311) inclut une pluralité de bras (6, 7, 8, 9, 10, 11, 12, 13) séparés les uns des autres par des espaces libres et disposés autour dudit pied (30) selon une répartition équiangulaire, chacun desdits bras (6, 7, 8, 9, 10, 11, 12, 13) s'étendant longitudinalement entre une extrémité centrale disposée du côté du pied (30) et une extrémité périphérique disposée du côté de la portion distale (312), ledit capteur (1) comprenant une pluralité de dispositifs d'excitation attachés à ladite portion proximale (311) pour exciter ledit résonateur (3) en vibration, ainsi qu'une pluralité de dispositifs de détection attachés à ladite portion proximale (311) pour détecter des vibrations dudit résonateur (3), lesdits dispositifs d'excitation et lesdits dispositifs de détection étant attachés auxdits bras (6, 7, 8, 9, 10, 11, 12, 13).

2. Capteur gyroscopique vibrant (1) selon l'une quelconque des revendications précédentes **caractérisé en ce que** ladite portion proximale (311) présente un profil en tronc de cône circulaire droit.

3. Capteur gyroscopique vibrant (1) selon la revendication précédente **caractérisé en ce que** ledit cône présente un axe de symétrie et est incliné par rapport à un plan (P) perpendiculaire audit axe de symétrie d'un angle (α) compris entre 10 et 45°, de préférence compris entre 25 et 35°, de façon encore plus préférentielle environ égal à 30°.

4. Capteur gyroscopique vibrant (1) selon l'une quelconque des revendications précédentes **caractérisé en ce que** ladite portion proximale (311) s'étend entre d'une part un premier bord circulaire (3110) raccordé audit pied (30) et d'autre part un deuxième bord circulaire (3111) raccordé à ladite portion distale (312) et à partir duquel s'élève cette dernière jusqu'audit bord terminal libre (310), lesdits premier et deuxième bords circulaires (3110, 3111) présentant respectivement un premier et un deuxième diamètres tels que ledit premier diamètre représente au plus 60% du deuxième diamètre, de préférence au plus 50% du deuxième diamètre, ladite portion proximale (311) présentant une face externe (311A) qui s'étend du côté de l'embase (2) et une face interne (311B) opposée, ledit pied (30) comprenant une portion extérieure (302) en saillie du côté de ladite face externe (311A).

5. Capteur gyroscopique vibrant (1) selon la revendication précédente **caractérisé en ce que** ladite portion extérieure (302) présente une restriction de section locale (302A) formant une surface concave à laquelle se raccorde ladite face externe (311A).

6. Capteur gyroscopique vibrant (1) selon l'une quelconque des revendications 4 et 5 **caractérisé en ce que** ledit pied (30) comprend une portion intérieure (301) en saillie du côté de ladite face interne (311B), ledit résonateur (3) comprenant un congé de raccordement (5) qui s'étend autour de ladite portion intérieure (301) pour raccorder cette dernière à ladite face interne (311B), ledit congé de raccordement (5) présentant par exemple un rayon de courbure au moins égal à 1 mm, de préférence au moins égal à 2 mm.

7. Capteur gyroscopique vibrant (1) selon l'une quelconque des revendications précédentes **caractérisé en ce que** ledit pied (30) présente un caractère monolithique massif.

8. Capteur gyroscopique vibrant (1) selon l'une quelconque des revendications précédentes **caractérisé en ce que** chacun desdits bras (6, 7, 8, 9, 10, 11, 12, 13) inclut au moins :
- un tronçon principal (6A, 7A, 8A, 9A, 10A, 11A, 12A, 13A) qui s'étend à partir de ladite extrémité centrale,
- et un tronçon terminal (6B, 7B, 8B, 9B, 10B, 11B, 12B, 13B) de section réduite par rapport à celle du tronçon principal et qui s'étend entre ce dernier et ladite extrémité périphérique.

9. Capteur gyroscopique vibrant (1) selon l'une quelconque des revendications précédentes **caractérisé en ce que** ladite portion proximale (311) comprend une première collerette (25) qui s'étend à partir et autour dudit pied (30), chaque première extrémité de chacun desdites bras (6, 7, 8, 9, 10, 11, 12, 13) étant solidaire de ladite première collerette (25).

10. Capteur gyroscopique vibrant (1) selon l'une quelconque des revendications précédentes **caractérisé en ce que** ladite portion proximale (311) comprend une deuxième collerette (26) qui s'étend à partir de la portion distale (312) vers l'intérieur du résonateur (3), chaque deuxième extrémité de chacun desdits bras (6, 7, 8, 9, 10, 11, 12, 13) étant solidaire de la deuxième collerette (26).

11. Capteur gyroscopique vibrant (1) selon l'une quelconque des revendications précédentes **caractérisé en ce qu'**il comprend des éléments piézo-électriques (14, 15, 16, 17, 18, 19, 20, 21, 22, 23, 24) qui forment lesdits dispositifs d'excitation et lesdits dispositifs de détection.

12. Capteur gyroscopique vibrant (1) selon la revendication précédente **caractérisé en ce qu'**il comprend des tiges conductrices (40, 41, 42, 43, 44, 45, 46, 47) connectées électriquement auxdits éléments piézo-électriques (14, 15, 16, 17, 18, 19, 20, 21, 22, 23, 24) par des micro-câbles, chaque tige conductrice (40, 41, 42, 43, 44, 45, 46, 47) étant par exemple disposée en correspondance respective avec l'un desdits espaces libres.

## Patentansprüche

1. Vibrationskreiselsensor (1), umfassend:
- eine Basis (2),
- einen Resonator (3), der einen zentralen Fuß (30), durch den der Resonator (3) an der Basis (2) befestigt ist, und eine besagte Seitenwand (31) umfasst, die von dem besagten Fuß (30) zu einer freien Endkante (310) aufragt, die eine Öffnung begrenzt,
wobei die besagte Seitenwand (31) einen proximalen Abschnitt (311), der von und um den besagten Fuß (30) herum aufragt, sowie einen distalen Abschnitt (312) von allgemein zylindrischer Form umfasst, der sich in der Verlängerung des besagten proximalen Abschnitts (311) bis zur besagten freien Endkante (310) erstreckt, wobei sich der besagte proximale Abschnitt (311) ausgehend vom Fuß (30) in Richtung des distalen Abschnitts (312) allmählich aufweitet,
wobei der Sensor **dadurch gekennzeichnet ist, dass** der besagte proximale Abschnitt (311) eine Vielzahl von Armen (6, 7, 8, 9, 10, 11, 12, 13) einschließt, die voneinander durch freie Räume getrennt und um den besagten Fuß (30) in einer gleichwinkligen Verteilung angeordnet sind, wobei sich jeder der besagten Arme (6, 7, 8, 9, 10, 11, 12, 13) in Längsrichtung zwischen einem besagten mittleren Ende, das auf der Seite des Fußes (30) angeordnet ist, und einem peripheren Ende, das auf der Seite des distalen Abschnitts (312) angeordnet ist, erstreckt, wobei der Sensor (1) eine Mehrzahl von Anregungsvorrichtungen, die an dem besagten proximalen Abschnitt (311) angebracht sind, um den Resonator (3) zu Schwingungen anzuregen, sowie eine Mehrzahl von Erfassungsvorrichtungen, die an dem besagten proximalen Abschnitt (311) angebracht sind, um Schwingungen des besagten Resonators (3) zu erfassen, umfasst, wobei die besagten Anregungsvorrichtungen und die besagten Erfassungsvorrichtungen an den besagten Armen (6, 7, 8, 9, 10, 11, 12, 13) angebracht sind.

2. Vibrationskreiselsensor (1) nach einem der vorhergehenden Ansprüche, **dadurch gekennzeichnet, dass** der besagte proximale Abschnitt (311) ein gerades kreisförmiges Kegelstumpfprofil aufweist.

3. Vibrationskreiselsensor (1) nach dem vorhergehenden Anspruch, **dadurch gekennzeichnet, dass** der Kegel eine Symmetrieachse aufweist und gegenüber einer Ebene (P) senkrecht zur Symmetrieachse um einen Winkel (α) zwischen 10 und 45°, bevorzugt zwischen 25 und 35°, noch bevorzugter etwa gleich 30°, geneigt ist.

4. Vibrationskreiselsensor (1) nach einem der vorhergehenden Ansprüche, **dadurch gekennzeichnet, dass** sich der besagte proximale Abschnitt (311) zwischen einerseits einem ersten kreisförmigen Rand (3110), der mit dem Fuß (30) verbunden ist, und andererseits einem zweiten kreisförmigen Rand (3111) erstreckt, der mit dem besagten distalen Abschnitt (312) verbunden ist und von dem aus letzterer bis zum freien Endrand (310) ansteigt, wobei der besagte erste und zweite kreisförmige Rand (3110, 3111) jeweils einen ersten und einen zweiten Durchmesser aufweisen, so dass der erste Durchmesser höchstens 60% des zweiten Durchmessers, bevorzugt höchstens 50% des zweiten Durchmessers beträgt, wobei der besagte proximale Abschnitt (311) eine Außenseite (311A), die sich auf der Seite des Sockels (2) erstreckt, und eine gegenüberliegende Innenseite (311B) aufweist, wobei der Fuß (30) einen Außenabschnitt (302) umfasst, der auf der Seite besagter Außenseite (311A) vorspringt.

5. Vibrationskreiselsensor (1) nach dem vorhergehenden Anspruch, **dadurch gekennzeichnet, dass** besagter äußerer Abschnitt (302) eine lokale Querschnittsverengung (302A) aufweist, die eine konkave Oberfläche bildet, an die sich besagte Außenseite (311A) anschließt.

6. Vibrationskreiselsensor (1) nach einem der Ansprüche 4 oder 5, **dadurch gekennzeichnet, dass** der Fuß (30) einen inneren Abschnitt (301) umfasst, der von der Seite besagter Innenseite (311B) vorsteht, wobei der Resonator (3) eine Verbindungsrundung (5) umfasst, die sich um besagten inneren Abschnitt (301) herum erstreckt, um diesen mit besagter Innenseite (311B) zu verbinden, wobei besagte Verbindungsrundung (5) beispielsweise einen Krümmungsradius von mindestens 1 mm, bevorzugt mindestens 2 mm, aufweist.

7. Vibrationskreiselsensor (1) nach einem der vorhergehenden Ansprüche, **dadurch gekennzeichnet, dass** der besagte Fuß (30) einen massiven monolithischen Charakter aufweist.

8. Vibrationskreiselsensor (1) nach einem der vorhergehenden Ansprüche, **dadurch gekennzeichnet, dass** jeder der Arme (6, 7, 8, 9, 10, 11, 12, 13) mindestens enthält:
- einen Hauptabschnitt (6A, 7A, 8A, 9A, 10A, 11A, 12A, 13A), der sich von dem besagten zentralen Ende aus erstreckt,
- und einen Endabschnitt (6B, 7B, 8B, 9B, 10B, 11B, 12B, 13B), dessen Querschnitt im Vergleich zum Hauptabschnitt verringert ist und der sich zwischen dem Hauptabschnitt und besagtem peripheren Ende erstreckt.

9. Vibrationskreiselsensor (1) nach einem der vorhergehenden Ansprüche, **dadurch gekennzeichnet, dass** der besagte proximale Abschnitt (311) einen ersten Kragen (25) umfasst, der sich von und um den besagten Fuß (30) erstreckt, wobei jedes erste Ende jedes der besagten Arme (6, 7, 8, 9, 10, 11, 12, 13) mit dem besagten ersten Kragen (25) fest verbunden ist.

10. Vibrationskreiselsensor (1) nach einem der vorhergehenden Ansprüche, **dadurch gekennzeichnet, dass** der besagte proximale Abschnitt (311) einen zweiten Kragen (26) umfasst, der sich vom distalen Abschnitt (312) aus in das Innere des Resonators (3) erstreckt, wobei jedes zweite Ende jedes der besagten Arme (6, 7, 8, 9, 10, 11, 12, 13) fest mit dem zweiten Kragen (26) verbunden ist.

11. Vibrationskreiselsensor (1) nach einem der vorhergehenden Ansprüche, **dadurch gekennzeichnet, dass** er piezoelektrische Elemente (14, 15, 16, 17, 18, 19, 20, 21, 22, 23, 24) umfasst, die die Anregungsvorrichtungen und die Erfassungsvorrichtungen bilden.

12. Vibrationskreiselsensor (1) nach dem vorhergehenden Anspruch, **dadurch gekennzeichnet, dass** er leitende Stäbe (40, 41, 42, 43, 44, 45, 46, 47) umfasst, die mit den piezoelektrischen Elementen (14, 15, 16, 17, 18, 19, 20, 21, 22, 23, 24) über Mikrokabel elektrisch verbunden sind, wobei jeder leitende Stab (40, 41, 42, 43, 44, 45, 46, 47) beispielsweise in jeweiliger Übereinstimmung mit einem der Freiräume angeordnet ist.

## Claims

1. A vibratory gyroscope sensor (1) comprising:
- a base (2),
- a resonator (3) that includes a central foot (30) by which the resonator (3) is attached to said base (2) and a sidewall (31) that rises from said foot (30) up to a free end edge (310) delimiting an opening,
said sidewall (31) comprising a proximal portion (311) that rises from and around said foot (30) as well as a distal portion (312) generally cylindrical in shape that extends in line with said proximal portion (311) up to said free end edge (310), said proximal portion (311) progressively widening from the foot (30) towards the distal portion (312),
the sensor being **characterized in that** said proximal portion (311) includes a plurality of arms (6, 7, 8, 9, 10, 11, 12, 13) separated from each other by clear spaces and arranged equiangularly around said foot (30), each of said arms (6, 7, 8, 9, 10, 11, 12, 13) extending longitudinally between a central end arranged on the side of the foot (30) and a peripheral end arranged on the side of the distal portion (312), said sensor (1) comprising a plurality of excitation devices attached to said proximal portion (311) to excite said resonator (3) into vibration, as well as a plurality of detection devices attached to said proximal portion (311) to detect vibrations of said resonator (3), said excitation devices and said detection devices being attached to said arms (6, 7, 8, 9, 10, 11, 12, 13).

2. The vibratory gyroscope sensor (1) according to any one of the preceding claims, **characterized in that** said proximal portion (311) has a straight circular frustoconical profile.

3. The vibratory gyroscope sensor (1) according to the preceding claim, **characterized in that** said cone has a symmetry axis and is inclined with respect to a plane (P) perpendicular to said symmetry axis by an angle (α) between 10 and 45°, preferably between 25 and 35°, even more preferentially equal to about 30°.

4. The vibratory gyroscope sensor (1) according to any one of the preceding claims, **characterized in that** said proximal portion (311) extends between, on the one hand, a first circular edge (3110) connected to said foot (30), and on the other hand, a second circular edge (3111) connected to said distal portion (312) and from which the latter rises up to said free end edge (310), said first and second circular edges (3110, 3111) having such a first and a second diameter, respectively, that said first diameter represents at most 60 % of the second diameter, preferably at most 50 % of the second diameter, said proximal portion (311) having an external face (311A) that extends on the side of the base (2) and an opposite, internal face (311B), said foot (30) comprising an external portion (302) protruding on the side of the external face (311A).

5. The vibratory gyroscope sensor (1) according to the preceding claim, **characterized in that** said external portion (302) has a local cross-sectional restriction (302A) forming a concave surface to which said external face (311A) is connected.

6. The vibratory gyroscope sensor (1) according to any one of claims 4 and 5, **characterized in that** said foot (30) comprises an internal portion (301) protruding on the side of said internal face (311B), said resonator (3) comprising a connection fillet (5) that extends around said internal portion (301) to connect the latter to said internal face (311B), said connection fillet (5) having for example a radius of curvature at least equal to 1 mm, preferably at least equal to 2 mm.

7. The vibratory gyroscope sensor (1) according to any one of the preceding claims, **characterized in that** said foot (30) has a massive and monolithic nature.

8. The vibratory gyroscope sensor (1) according to the preceding claim, **characterized in that** each of said arms (6, 7, 8, 9, 10, 11, 12, 13) includes at least:
- a main section (6A, 7A, 8A, 9A, 10A, 11A, 12A, 13A), which extends from said central end,
- and an end section (6B, 7B, 8B, 9B, 10B, 11B, 12B, 13B) of reduced cross-section with respect to that of the main section and that extends between the latter and said peripheral end.

9. The vibratory gyroscope sensor (1) according to any one of the preceding claims, **characterized in that** said proximal portion (311) comprises a first flange (25) that extends from and around said foot (30), each first end of each of said arms (6, 7, 8, 9, 10, 11, 12, 13) being integral with said first flange (25).

10. The vibratory gyroscope sensor (1) according to any one of the preceding claims, **characterized in that** said proximal portion (311) comprises a second flange (26) that extends from the distal portion (312) towards the inside of the resonator (3), each second end of each of said arms (6, 7, 8, 9, 10, 11, 12, 13) being integral with said second flange (26).

11. The vibratory gyroscope sensor (1) according to any one of preceding claims, **characterized in that** it comprises piezoelectric elements (14, 15, 16, 17, 18, 19, 20, 21, 22, 23, 24) that form said excitation devices and said detection devices.

12. The vibratory gyroscope sensor (1) according the preceding claim, **characterized in that** it comprises conductive rods (40, 41, 42, 43, 44, 45, 46, 47) electrically connected to said piezoelectric elements (14, 15, 16, 17, 18, 19, 20, 21, 22, 23, 24) by micro-cables, each conductive rod (40, 41, 42, 43, 44, 45, 46, 47) being for example arranged in respective correspondence with one said clear spaces.
